# EUROPEAN PATENT SPECIFICATION

(11) **EP 0 650 307 B1**
(45) Date of publication and mention of the grant of the patent: **24.03.2004**
(21) Application number: 94307423.7
(22) Date of filing: 10.10.1994
(51) Int. Cl.: H04Q 7/38

(54) **Radio telecommunication apparatus**
Funktelekommunikationsgerät
Appareil de télécommunication par radio

(30) Priority: 26.10.1993 US 140998
(43) Date of publication of application: 26.04.1995
(73) Proprietor: KABUSHIKI KAISHA TOSHIBA, Kawasaki-shi, Kanagawa-ken 210-8572 (JP)
(72) Inventor: Obayashi, Arata, Minato-ku, Tokyo (JP); Haga, Takumi, Minato-ku, Tokyo (JP); Yamasita, Masataka, Minato-ku, Tokyo (JP)
(74) Representative: Brookes Batchellor

(56) References cited:
- EP-A- 0 295 678
- EP-A- 0 344 989
- EP-A- 0 538 014
- EP-A- 0 554 093

## Description

### BACKGROUND OF THE INVENTION

### FIELD OF THE INVENTION

The present invention relates to a radio telecommunication apparatus used in a radio telecommunication system such as a motor vehicle radio telephone system and a portable radio telephone systems and more particularly to a radio telecommunication apparatus having a function so that it is easy for the user to operate the apparatus.

### DESCRIPTION OF THE RELATED ART

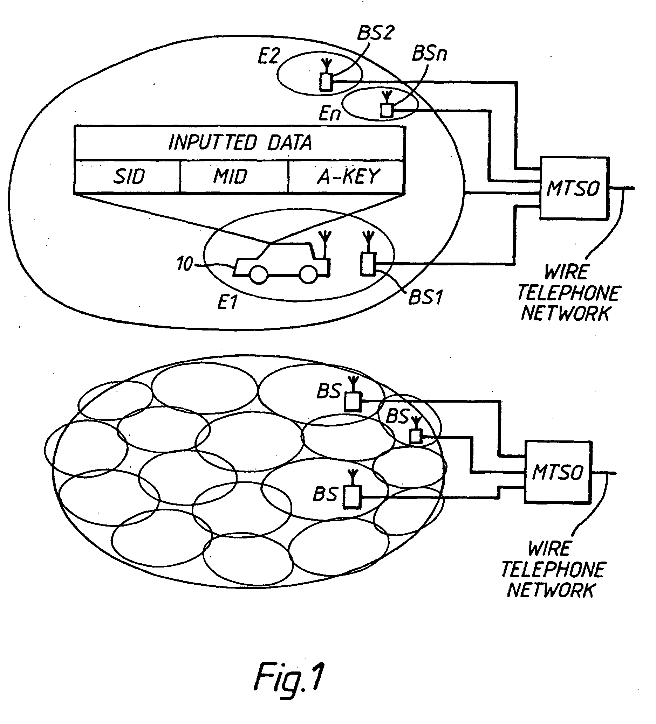

A cellular radio communication system will be described with reference to FIG. 1. A mobile telephone switching office defined as MTSO and a plurality of base stations defined as BS1-BSn are provided in an area. Each of these base stations BS1 BSn, which has its own radio zone E1-En, is respectively connected to MTSO. A mobile radio apparatus 1 may be in communication with the base stations BS1-BSn via radio links in the radio zones E En. If the user travels out of zone E1 and enters another zone E2, the radio link between the apparatus 1 and BS1 is disconnected and a new radio link between the apparatus 1 and BS2 in the radio zone E2 is established.

MTSO broadcasts a system identification number defined as an SID to the base stations. Further the base stations broadcast SID to the mobile radio apparatus 1.

The user is assigned a mobile identification number defined as MID for the user's ,apparatus. In case of using the apparatus for business and private use, the user may be assigned a plurality of MIDs. When the user operates the apparatus, the apparatus requests the user to select one of the assigned MIDs and input it into the apparatus. As a result, the user may communicate with another party

Further in a standard of the mobile radio telephone system called IS-54, an authentication key number defined as an A-KEY corresponding to an MID is assigned to the user. The A-KEY is taught to only the user by a sevice company managing MTSO. The MID is published in a telephone directory while the A-key is not published in the telephone directory. Therefore other people know the MID while not knowing the A-KEY corresponding the MID.

If the user is assigned a plurality of MIDs, the user is assigned a plurality of SIDs and A-KEYs. Each of the SIDs and the A-KEYs correspond to each of the MIDs. If the user operates the apparatus, the apparatus requests the user to input one of the SID, one of the MIDs and one of the A-KEYs. After the SID, the MID and the A-KEY are inputted, the apparatus and the base station check whether the user inputs the given A-KEY corresponding to the inputted MID into the apparatus. If the user inputs the A-KEY corresponding to the inputted MID, the apparatus is set to be operative.

Otherwise, the apparatus is not set to be operative. Even if another party sees an MID published in the directory and copies the MID to another apparatus , he can not input an A-KEY corresponding to the MID. Therefore as long as another party does not input the A-KEY corresponding to the MID, another party is inhibited to operate the apparatus.

According to the above-described function, the MID is prevented from being used by another party - an unauthorised party.

However in the apparatus, the user needs to input the SID, the MID, and the A-KEY corresponding to the MID. Further since the A-KEY is confidetial and the user can not confirm the A-KEY in the directory, the user needs to memorize the A-KEY. The A-KEY comprises in particular 26 figures. Therefore it is troublesome for the user to memorize the A-KEY and to input the A-KEY. Furthermore it is dangerous for the user to input the A-KEY when the user drives a car.

The reader is referred to EP-A-0 344 989, EP-A-0 544 093 and EP-A-0 538 014.

### SUMMARY OF THE INVENTION

It is accordingly an object of the present invention to provide a radio telecommunication apparatus which eliminates the input of the A-KEY.

It is a further object of the present invention to provide a radio telecommunication apparatus so that the user may keep his mind on his driving.

According to this invention there is provided radio communication apparatus for use in a radio telecommunication system, wherein the radio telecommunication system encompasses a plurality of zones each having at least one base station which broadcasts a system identification number over at least one radio channel within the zone of the base station, the radio telecommunication apparatus comprising, receiving means for receiving a system identification number, storing means for storing at least one authentication number, at least one mobile identification number, and at least one system identification number, comparing means responsive to the receiving means and the storing means for comparing the received system identification number with each of the stored system identification number, adopting means responsive to the comparing means for adopting one of the stored authentication number and one of the stored mobile identification number, each corresponding to one of the stored system identification number which is identical to the received system identification number, and generating means responsive to the adopting means for generating a data in response to the adopted mobile identification number and the adopted authentication number.

### BRIEF DESCRIPTION OF THE DRAWINGS

FIG. 1 is a block diagram illustrating a conventional cellular radio telephone system.
FIG. 2 is a block diagram illustrating an embodiment of a cellular radio telephone system according to the present invention.
FIG. 3 is a block diagram illustrating an arrangement of a mobile telephone apparatus according to the embodiment of the present invention.
FIG. 4 is a flow chart illustrating a connection control operation sequence in the embodiment of the present invention.
FIG. 5 is a flow chart illustrating an initialization operation step in the connection control operation of FIG. 4.
FIG. 6 is a flow chart illustrating an operation after initialization in the connection control operation.
FIG. 7 is a flow chart illustrating an incoming response operation sequence in the connection control operation.
FIG. 8 is a flow chart illustrating a call origination operation sequence in the connection control operation.
FIG. 9 is a flow chart illustrating A-KEY adopting operation according to another embodiment of the present invention.

### DESCRIPTION OF THE PREFERRED EMBODIMENTS

A radio telecommunication apparatus in accordance with the present invention will be detailed with reference to the attached drawings.

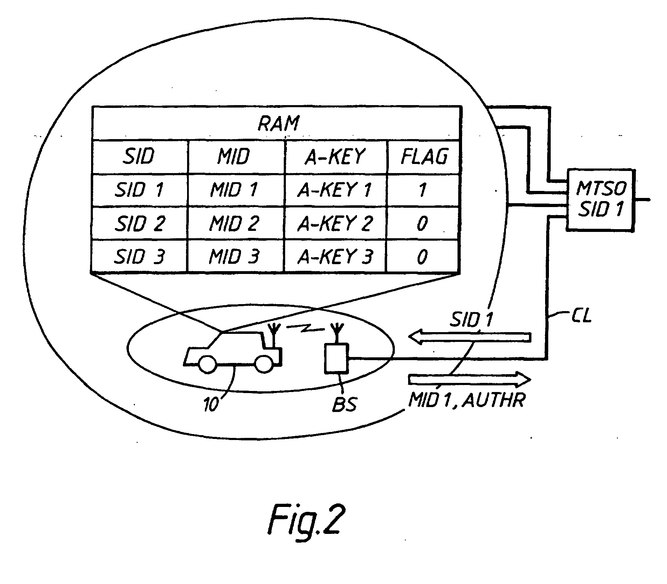

Referring to FIG. 2, there is shown a cellular radio communication system. An MTSO and a base station BS are provided in an area. A mobile radio apparatus 10 may be in communication with the base station BS via a radio link. The base station BS is connected with the MTSO via a landline defined as CL.

The radio telephone apparatus 1 comprises a memory (referred to as RAM hereinafter) storing a plurality of system identification numbers SID 1-3, a plurality of mobile identification numbers MID 1-3 and a plurality of authentication numbers A-KEY 1-3. The A-KEY 1 corresponds to the SID 1 and the MID 1. The A-KEY 2 corresponds to the SID 2 and the MID 2. The A-KEY 3 corresponds to the SID 3 and the MID 3.

When the mobile radio telephone apparatus 10 receives SID 1 transmitted from MTSO via the base station BS before a standby state, the mobile radio telephone apparatus 10 selects the MID 1 and the A-KEY 1 corresponding to the SID 1 from the RAM. When the mobile radio telephone apparatus 10 is in a call origination sequence or in an incoming response sequence, the SID 1, the MID 1 and the A-KEY 1 are converted into a value by an algorithm. The algorithm is defined as CAVE. The value is defined as an AUTHR. In this state, the MID 1 and the AUTHR determined in response to SID 1, MID 1 and A-KEY 1, is transmitted to MTSO via the base station.

When MTSO receives the MID 1 and the AUTHR, the MTSO selects the A-KEY stored in the MTSO corresponding to the transmitted MID 1. Thereafter the MID 1 and the selected A-KEY are inputted into the CAVE at the MTSO. Thereafter, AUTHR' is obtained as an output of the CAVE and compared with the transmitted AUTHR. When AUTHR' matches AUTHR, the MTSO treats the mobile telephone apparatus as a formal user.

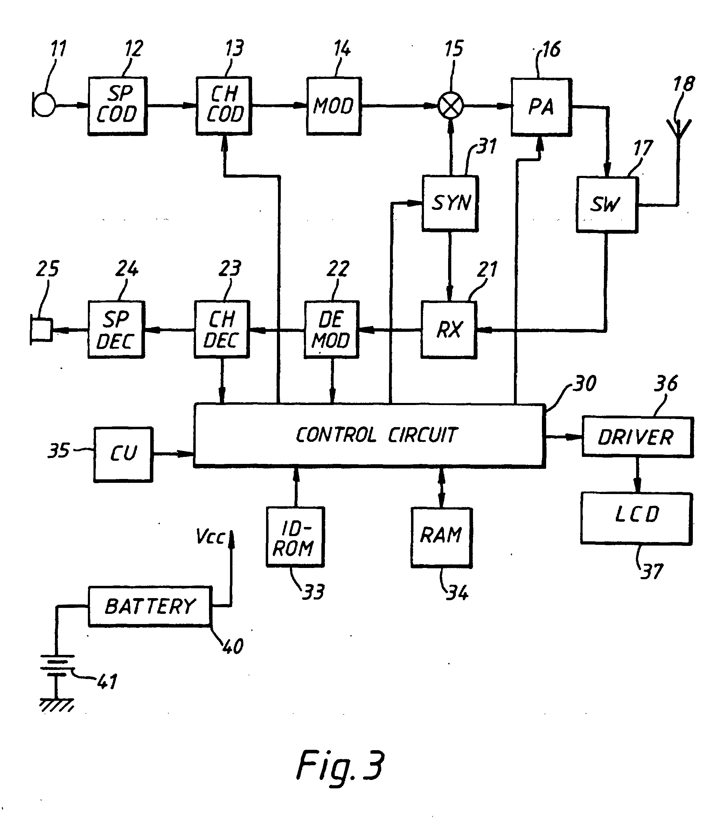

Referring first to FIG. 3, there is shown in block diagram of the mobile radio telephone apparatus referred as the radio telephone apparatus in accordance with an embodiment of the present invention.

The radio telephone apparatus is roughly divided . into transmission, reception and control sections. Reference numeral 40 denotes a power supply such as a battery. The transmission section comprises a microphone 11, a speech coder (SPCOD) 12, an error correction coder (CHCOD) 13, a digital modulator (MOD) 14, an adder 15, a power amplifier (PA) 16, high frequency switch circuit (SW) 17 and an antenna 18.

A transmit audio signal from the microphone 11 is subjected at the speech coder 12 to a coding. The speech coder 12 outputs the digital transmit signal. The error correction coder 13 performs its error correction coding operation over the digital transmit signal and a digital control signal issued from a control circuit 30 (which will be explained later).

The digital modulator 14 generates a modulation signal corresponding to a digital transmit signal issued from the error correction coder 13. The adder 15 adds the modulation signal received from the digital modulator 14 and a carrier signal received from a synthesizer 31 for frequency conversion. The power amplifier 16 amplifies a high frequency signal received from the adder 15 into a predetermined level and provide a transmit signal.

The high frequency switch 17 is turned ON only for a period of time corresponding to a transmit time slot specified by the control circuit 30. During this time the high frequency switch 17 receives the transmit signal from the power amplifier 16 and supplies it to the antenna 18. The transmit signal is transmitted toward a base station (not shown) in the form of a radio transmit signal.

The receiver section includes a receiver (RX) 21, a digital demodulator (DEMOD) 22, an error correction decoder (CHDEC) 23, a speech decoder (SPDEC) 24 and a receiver 25.

The receiver 21 performs its frequency converting operation over a radio receive signal received from the antenna through the high frequency switch 17. The digital demodulator 22 performs bit and frame synchronizing operations over a receive signal received from the receiver 21 to obtain a synchronized signal and supplies the synchronized signal to the control circuit 30. The bit and frame synchronizing operations are defined as a word synchronization. The error correction decoder 23 performs its error correction decoding operation over a digital demodulation signal received from the digital demodulator 22 to obtain a digital receive signal.

Further, the error correction decoder 23 provides a digital control signal for scanning channels and communication, to the control circuit 30.

The digital receive signal issued from the error correction decoder 23 is sent to the speech decoder 24. The speech decoder 24 performs its decoding operation over the digital receive signal to provide an analog receive signal. The analog receive signal is then applied to the speaker 25.

Further, the control section includes the aforementioned control circuit 30, the aforementioned frequency synthesizer (SYS) 31, an ID-ROM 33 for storing a programming data, a RAM 34 for storing SIDs, MIDs and A-KEYs, console unit (cu) 35, an LCD driver 36 and an LCD 37. The synthesizer 31 generates an oscillation frequency necessary for radio communication with the base station under control of the control circuit 30.

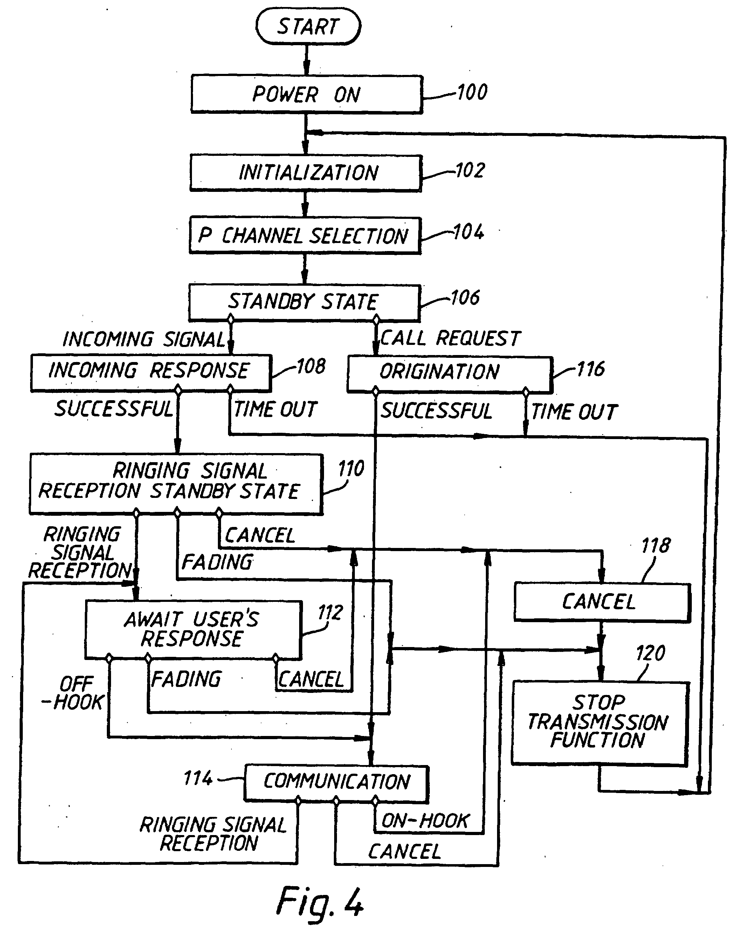

A connection control operation of telephone apparatus will now be described with reference to FIG. 4. When a power switch is turned on, an initialization operation is performed.

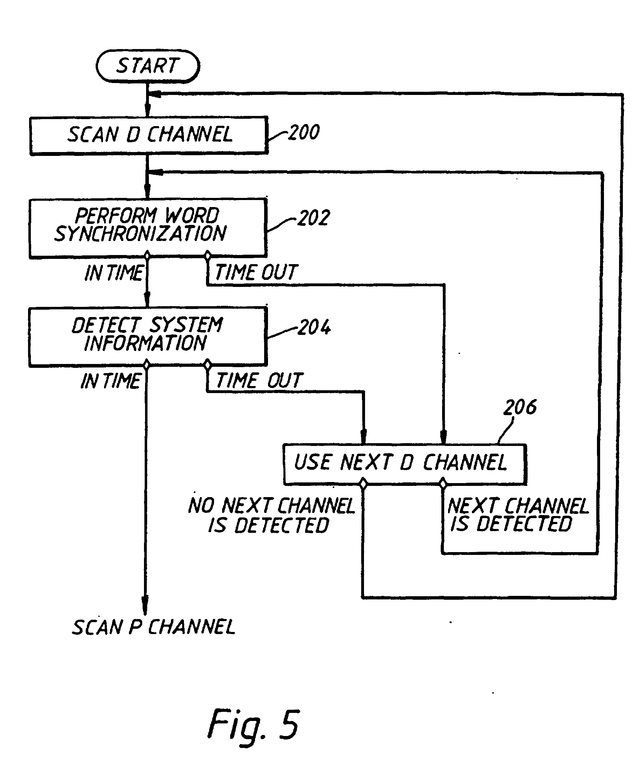

FIG. 5 is a detailed flow chart which illustrates the initial radio channel connection operation, defined as the initialization. The control circuit 30 controls synthesizer 31 to change the frequency of output therefrom. Thereby, a predetermined range of control channels (referred to as D channels hereinafter) are scanned to obtain the information indicative of electric field intensity of the received signals over each channel (step 200). The channel having the strongest electric field intensity is selected from the D channels and the apparatus is ready for receiving signals through the D channel having the strongest electric field intensity. In this case, information of a channel having the second strongest intensity is also obtained.

The control circuit 30 performs bit and frame synchronization operations (referred to as a word synchronization) on signals received through the selected D channel (step 202). If the word synchronization is performed within a predetermined period of time, a system information is detected through signals received through this D channel (step 204).

The system information includes an SID and a range of frequency channels (referred to as P channels hereinafter) to be scanned next. If the system information is detected within a predetermined period of time, the control circuit 30 scans P channels.

If the word synchronization or system information reception is not performed within a predetermined period of time, the D channel having the second strongest intensity is used to repeat the above operation (step 206). In this case, if the word synchronization or the system information reception is again not performed within the predetermined period of time, the control circuit scans the D channels again (step 200).

When the above initialization operations are completed, the control circuit 30 performs scanning similar to the above scanning operation for the P channels for receiving incoming signal (step 104).

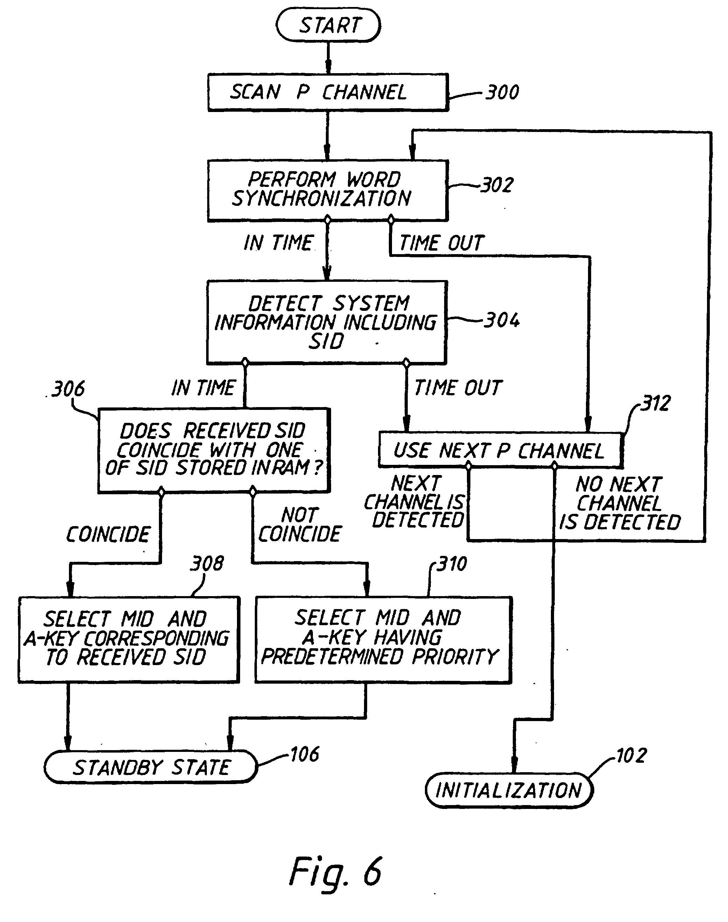

FIG. 6 is a detailed flow chart which illustrates the P channel connection after initialization. P channels are scanned to obtain the information indicative of the electric field intensity. The apparatus is ready for receiving information through the P channel having the strongest field intensity. In this case, information indicative of the P channel having the second strongest intensity is also obtained (step 300).

The word synchronization operation is performed on signals received through the P channel having the strongest field intensity (step 302). After that, the control circuit 30 obtains a system information including an SID (step 304). The received SID is compared with the stored SIDs in RAM (step 306). When the received SID coincides with one of the stored SIDs, the control circuit 30 selects an MID and an A-KEY corresponding to the received SID (step 308).

In step 306, when the received SID does not coincide with any one of the stored SIDs, the control circuit selects an MID and an A-kEY having a predetermined priority referring to the flag of the RAM shown in FIG. 2. For example, when the received SID does not coincide with any one of SID 1-3, the flag corresponding to MID 1 and A-KEY 1 is set to be "1", therefore MID 1 and A-KEY 1 are selected (step 310).

After selecting the MID and the A-KEY, the control circuit stores the MID and the A-KEY, and sets the apparatus to be a standby mode (step 106).

If the word synchronization is not performed or the system information is not obtained within a predetermined period of time, an operation similar to the above described is performed for the P channel having the second strongest intensity (step 312). When the word synchronization or the system information reception is again not performed within a predetermined period of time, initialization is resumed. (step 102).

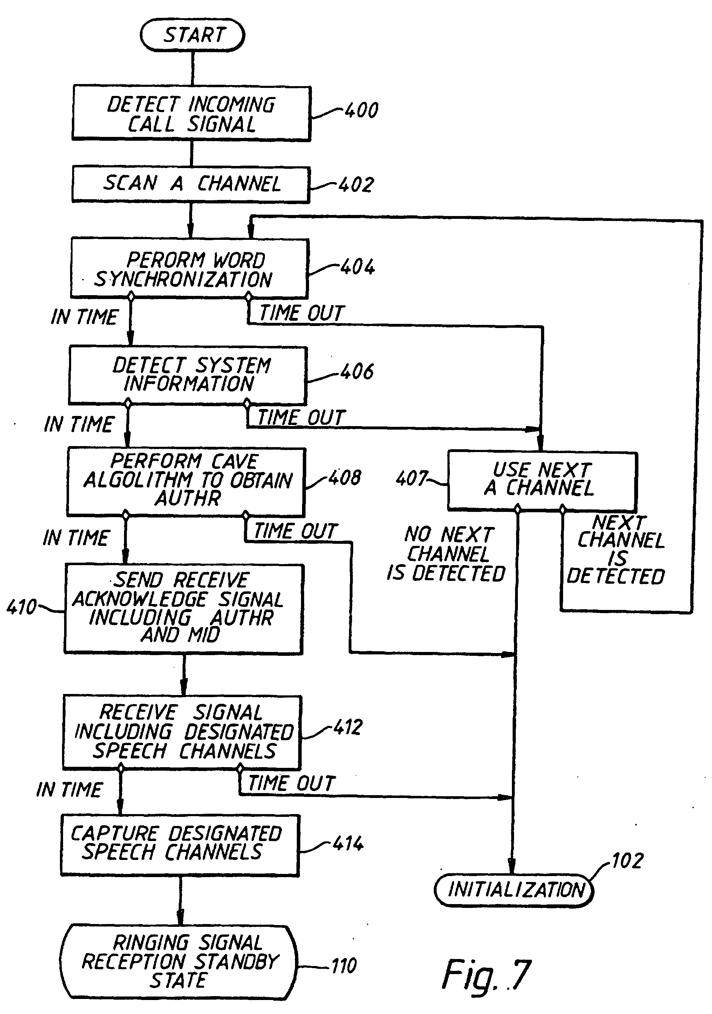

In the standby state in step 106 of FIG. 4, if the apparatus receives an incoming call signal, an incoming response sequence is performed (step 108). The sequence is illustrated by FIG. 7.

After detecting the incoming call signal (step 400), the control circuit 30 causes the demodulator to scan each predetermined control channel (defined as A channel) to obtain reception electric field intensity information (step 402). In this case, information indicative of the control channel having the second strongest electric field intensity is also obtained.

Next, a word synchronization is performed on signals received through the selected A channel (step 404). If the word synchronization is performed within a predetermined period of time, a system information is detected by signals received through this A channel (step 406). If the word synchronization is not performed or the system information is not obtained within a predetermined period of time, the A channel having the second strongest intensity is used to repeat the above operation (step 407). In this case, if word synchronization is again not performed or system information reception is again not performed within a predetermined period of time, initialization is resumed (step 102).

If the system information is detected within a predetermined period of time, the selected MID and the selected the A-KEY are inputted into the CAVE as parameters of the the CAVE. As an output of CAVE, an AUTHR is obtained (step 408). If the AUTHR is obtained within a predetermined period of time, the control circuit sends a receive acknowledge signal through the selected A channel to the base station. The receive acknowledge signal includes the obtained AUTHR and the selected MID (step 410).

If the base station receives the receive acknowledge signal from the mobile radio telephone apparatus, the base station selects an A-KEY' corresponding to the received MID from a memory of the base station. Thereafter the base station performs the CAVE. As parameters of the CAVE, the selected A-KEY' and the received MID are adopted. As an output of the CAVE, an AUTHR' is obtained. Thereafter the obtained AUTHR' is compared with the received AUTHR from the mobile radio telephone apparatus. When the AUTHR' coincides with the AUTHR, the base station transmits the signal including the information indicative of designated speech channels. Otherwise, the base station does not transmit the signal.

Thereafter, a signal including an information indicative of designated speech channels is received (step 412). When the signal is received within a predetermined period of time, A channels are switched to the designated speech channels which include a forward channel for transmitting audio signals to the base station and a backward channel for receiving audio signals from the calling apparatus (step 414). Thereby a communication link between a calling telephone apparatus and the called apparatus is established.

If the AUTHR is not obtained in step 408 within a predetermined period of time, or the signal including designated speech channels is not received in step 412 within a predetermined period of time, the initialization is resumed (step 102).

After the control circuit captures designated speech channels, the apparatus is set to be a ringing signal reception standby state for receiving an incoming signal (step 110 in FIG. 4). When a calling signal is received, the apparatus generates a ringing tone. In this state, the apparatus is set to be awaiting user's response (step 112).

When the user responds to the ringing tone by taking handset or depressing a "SEND" key, the control circuit 30 performs a communication with the calling party (step 114).

When the electric field intensity of speech channels is less than a predetermined level because of a fading during more than a predetermined period of time, the transmission function is disabled (step 120). During communication, when the user takes the handset on-hook, the communication through speech channels is ceased (step 118). Thereafter when the transmission function is disabled (step 120), the initialization is resumed (step 102).

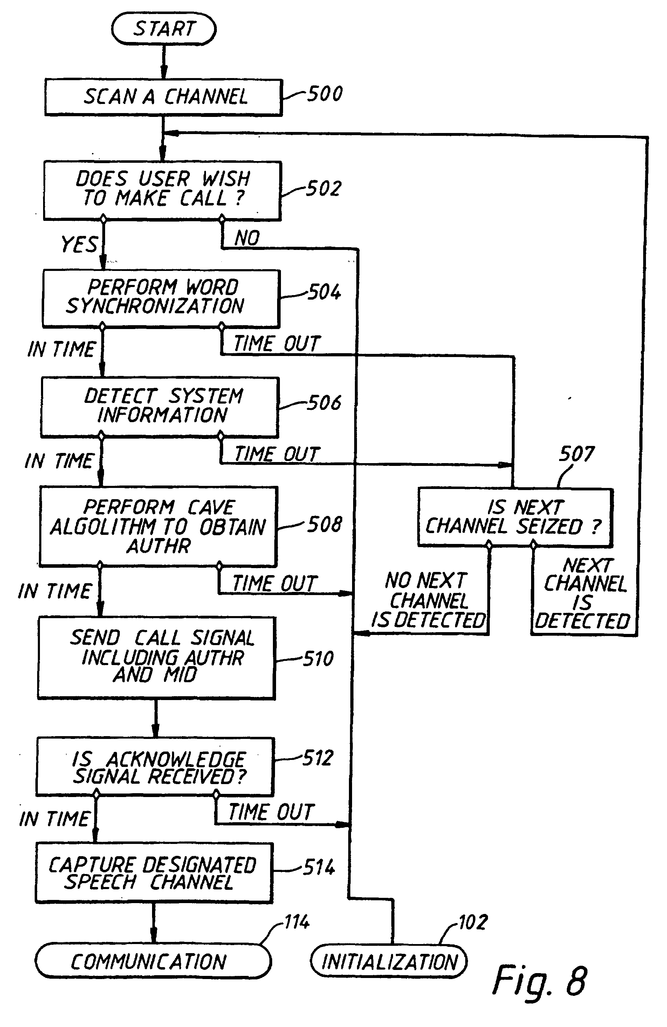

In the standby state in step 2d of FIG. 2, when a call request is detected by an input at the console unit 35 or a vice dialing, a call origination operation starts (step 116). This operation is illustrated by FIG. 8.

The control circuit causes the demodulator to scan each predetermined A channel (control channel) to obtain reception electric field intensity information. The channel having the strongest electric field intensity is selected from these control channels and the apparatus as set to receive signals through the control channel having the strongest intensity. In this case, information indicative of the control channel having the second strongest electric field intensity is also obtained (step 500). The control circuit confirms whether the user wishes to make a call (step 502).

This check is performed as follows. If the user enters a telephone number to be called on the console unit and depress "SEND" key, these key inputs are detected and a call flag in the control circuit is set at a logic "1".

In this case, the apparatus determines that the user wishes to make a call. However, if the user depresses "END" key after depression of the "SEND" key, the call flag is reset at a logic "0". In this case, the apparatus determines that the user does not wish to make a call and initialization is resumed (step 2b).

Next the word synchronization operation is performed on signals received through the selected A channel (step 504). If the word synchronization operation is performed within a predetermined period of time, a system information is detected from signals received through this control channel (step 506).

If the word synchronization or the system information reception cannot be performed, the same operation is performed using the control channel having the second strongest intensity (step 507). In this case, if no word synchronization can be performed, initialization is resumed (step 102).

When the call flag is at the logic "1", the control circuit confirms whether the selected control channel is appropriate for the origination signal to be broadcast by analyzing the system information signal from a base station.

Thereafter the selected MID and the selected A-KEY are inputted into the CAVE as parameters. As an output of the CAVE, an AUTHR is obtained (step 508).

If the control circuit detects that the user's will to make a call is confirmed and an appropriate control channel for broadcast of an origination signal is selected, a call origination signal including the telephone number to be called, which is entered by the user and the obtained AUTHR and the selected MID are transmitted over this control channel (step 510).

Thereafter, the apparatus detects whether the acknowledge signal from the base station has been received (step 512). If the base station receives the send call signal from the mobile radio telephone apparatus, the base station selects an A-KEY' corresponding to the received MID, from a memory of the base station. Thereafter the base station performs the CAVE. As parameters, the selected A-KEY' and the received MID are adopted. As an output of the CAVE, an AUTHR' is obtained. Thereafter the obtained AUTHR' is compared with the received AUTHR from the mobile radio telephone apparatus. When the AUTHR' coincides with the AUTHR, the base station transmits the acknowledge signal. Otherwise, the base station does not transmit the acknowledge signal.

The acknowledge signal includes an information indicative of designated speech channels. The base station calls the other party to be called on the basis of the telephone number included in the origination signal. When the acknowledge signal is received within a predetermined period of time, a communication link over the designated channels may then be established between the apparatus and the called apparatus (step 514). Otherwise, the initialization is resumed (step 102).

If the AUTHR is not obtained in step 508 within a predetermined period of time, the initialization is resumed (step 102).

In the above embodiment, after the transmitted SID by the base station is received, the A-KEY corresponding to the SID is automatically selected.

In the prior art, when the user determines an SID and an MID, the user needs to input the SID, the MID and an A-KEY corresponding to the SID and the MID. The SID has 5 figures, the MID has 10 figures and the A-KEY has 26 figures. Therefore it is troublesome for the user to input the SID, the MID and the A-KEY when the user drives a car.

On the contrary in the above embodiment, the user does not need to input the SID, the MID and the A-KEY. Therefore the user drives the car without inputting the SID, the MID and the A-KEY. The user may keep his mind on his driving.

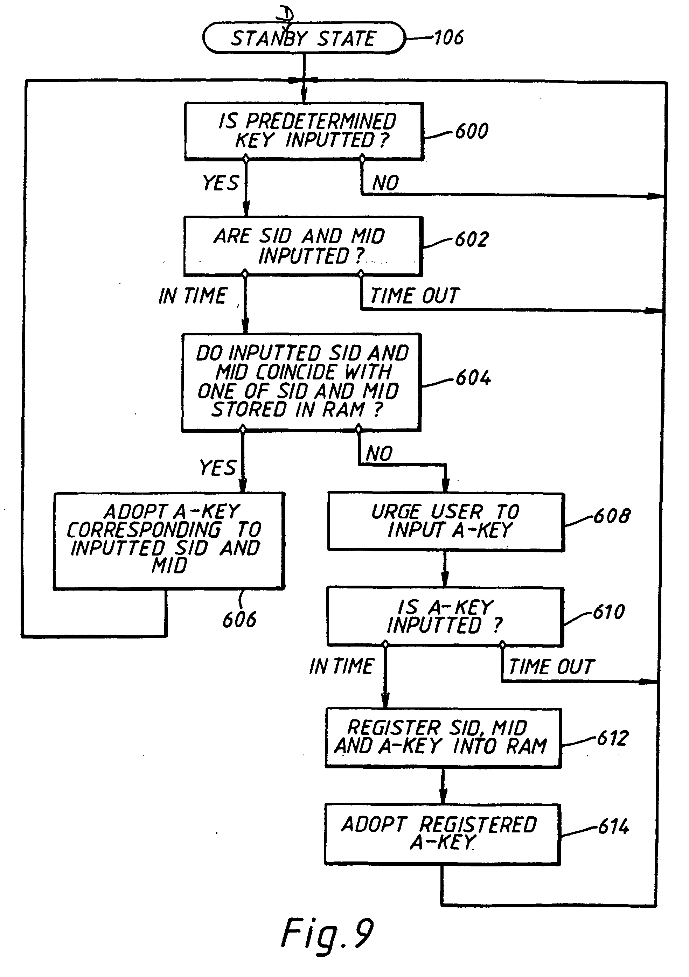

In the above embodiment, although the A-KEY is selected in response to the received SID, the A-KEY may be selected in response to inputted SID and MID. This another embodiment is shown in FIG. 9.

In the standly state, when a predetermined key is inputted (step 600). the control circuit urges the user to input an SID and an MID. When the SID and the MID are inputted within a predetermined period of time (step 602), the inputted SID and MID are compared with one of the SIDs and the MIDs stored in RAM (step 604). If the inputted SID and MID coincide with one of the SIDs and the MIDs stored in RAM, the control circuit adopts an A-KEY corresponding to the inputted SID and MID (step 606).

If the inputted SID and MID do not coincide with any one of the SIDs and the MIDs stored in RAM, the control circuit urges the user to input an A-KEY corresponding to the inputted SID and MID (step 608). The control circuit informs the user to input the A-KEY, for example, by displaying a massage or generating voice synthethis.

If the A-KEY is inputted within a predetermined period of time (step 610), the control circuit registers the inputted SID, MID and A-KEY into RAM (step 612). Thereafter, the control circuit adopts the registered A-KEY (step 614).

In step 602, if the SID and the MID are not inputted within a predetermined period of time, the apparatus is set to be in the standly state. Further in step 610, the A-KEY is not inputted within a predetermined period of time, the apparatus is set to be in the standby state.

Although in the above embodiment, in step 602, the SID and MID are inputted, only SID or only MID may be inputted.

Although in the above embodiment, a plurality of SIDs, MIDs and A-KEYs are stored in RAM, only one SID, MID and A-KEY may be stored in RAM.

Although an embodiment applied to a mobile telephone apparatus has been described, it is apparent: to those skilled in this art that this invention may be easily applied to any kind of radio telecommunication apparatus, for example, to a portable type radio telephone. This invention also is applicable to an apparatus adopting an analog modulating system and a dual mode apparatus adopting one of the digital modulating system or the analog modulating system. Further, the concepts of the present invention may be applied to a data transmission apparatus used in a cellular radio telecommunication system.

## Claims

1. Radio communication apparatus for use in a radio telecommunication system, wherein the radio telecommunication system encompasses a plurality of zones each having at least one base station which broadcasts a system identification number over at least one radio channel within the zone of the base station, the radio telecommunication apparatus comprising;
receiving means for receiving a system identification number;
storing means for storing at least one authentication number, at least one mobile identification number, and at least one system identification number;
comparing means responsive to the receiving means and the storing means for comparing the received system identification number with each of the stored system identification number;
adopting means responsive to the comparing means for adopting one of the stored authentication number and one of the stored mobile identification number, each corresponding to one of the stored system identification number which is identical to the received system identification number; and
generating means responsive to the adopting means for generating a data in response to the adopted mobile identification number and the adopted authentication number.

2. The apparatus of claim 1 wherein the adopting means further adopts a predetermined authentication number when the received system identification number does not coincide with any one of the stored identification number.

3. The apparatus of claim 2 further comprising transmitting means responsive to the adopting means and the generating means for transmitting the adopted mobile identification number and the generated data to the base station.

4. The apparatus of claim 3 **characterised in that** the apparatus further comprises generating means (30) responsive to the adopting means (30) for generating a data in response to the adopted mobile identification number and the adopted authentication number.

5. The apparatus claim 4 **characterised in that** the apparatus further comprises transmitting means (16) responsive to the adopting means (30) and the generating means (30) for transmitting the adopted mobile identification number and the generated data to the base station.

6. The apparatus of claim 3 **characterised in that** the apparatus further comprises control means (30) responsive to the adopting means (30) for inputting the adopted mobile identification number and the adopted authentication number into an algorithm and for outputting a data corresponding to an output of the algorithm.

## Patentansprüche

1. Funkkommunikationsgerät zur Verwendung in einem Funktelekommunikationssystem, wobei das Funktelekommunikationssystem umfaßt eine Mehrzahl von Zonen, wobei jede aufweist wenigstens eine Basisstation, die eine Systemidentifikationsnummer ausstrahlt über wenigstens einen Funkkanal innerhalb der Zone der Basisstation, wobei das Funktelekommunikationsgerät aufweist:
Empfangsmittel zum Empfangen einer Systemidentifikationsnummer;
Speichermittel zum Speichern wenigstens einer Berechtigungsnummer, wenigstens einer Mobilidentifikationsnummer und wenigstens einer Systemidentifikationsnummer;
Vergleichsmittel, ansprechend auf das Empfangsmittel und das Speichermittel zum Vergleichen der empfangenen Systemidentifikationsnummer mit jeder der gespeicherten Systemidentifikationsnummer/n;
Anpaßmittel, ansprechend auf das Vergleichsmittel zum Anpassen einer der gespeicherten Berechtigungsnummer/n und einer der gespeicherten Mobilidentifikationsnummer/n, wobei jede korrespondiert mit einer der gespeicherten Systemidentifikationsnummer/n, die identisch zur empfangenen Systemidentifikationsnummer ist; und
Erzeugungsmittel, ansprechend auf das Anpaßmittel zur Erzeugung von Daten in Antwort auf die angepaßte Mobilidentifikationsnummer und die angepaßte Berechtigungsnummer.

2. Gerät nach Anspruch 1, wobei das Anpaßmittel weiterhin anpaßt eine vorbestimmte Berechtigungsnummer, wenn die empfangene Systemidentifikationsnummer nicht übereinstimmt mit irgend einer der gespeicherten Identifkationsnummer/n.

3. Gerät nach Anspruch 2, weiterhin aufweisend Übertragungsmittel, ansprechend auf das Anpaßmittel und das Erzeugungsmittel zum Übertragen der angepaßten Mobilidentifikationsnummer und der erzeugten Daten zur Basisstation.

4. Gerät nach Anspruch 3, **dadurch gekennzeichnet, daß** das Gerät weiterhin aufweist Erzeugungsmittel (30), ansprechend auf das Anpaßmittel (30) zur Erzeugung von Daten in Antwort auf die angepaßte Mobil-Identifikationsnummer und die angepaßte Berechtigungsnummer.

5. Gerät nach Anspruch 4, **dadurch gekennzeichnet, daß** das Gerät weiterhin aufweist Übertragungsmittel (16), ansprechend auf das Anpaßmittel (30) und das Erzeugungsmittel (30) zum Übertragen der angepaßten Mo-bilidentifikationsnummer und der erzeugten Daten zur Basisstation.

6. Gerät nach Anspruch 3, **dadurch gekennzeichnet, daß** das Gerät weiterhin aufweist Steuermittel (30), ansprechend auf das Anpaßmittel (30) zur Eingabe der angepaßten Mobilidentifikationsnummer und der angepaßten Berechtigungsnummer in einen Algorithmus und zur Ausgabe von Daten, korrespondierend zu einer Ausgabe des Algorithmus.

## Revendications

1. Dispositif de radiocommunication destiné à être utilisé dans un système de télécommunication radio, dans lequel le système de télécommunication radio comprend une pluralité de zones comportant chacune au moins une station de base qui diffuse un numéro d'identification de système sur au moins un canal radio dans la zone de la station de base, le dispositif de télécommunication radio comprenant :
des moyens de réception pour recevoir un numéro d'identification de système ;
des moyens de mémorisation pour mémoriser au moins un numéro d'authentification, au moins un numéro d'identification de mobile et au moins un numéro d'identification de système ;
des moyens de comparaison sensibles aux moyens de réception et aux moyens de mémorisation pour comparer le numéro d'identification de système reçu avec chacun des numéros d'identification de système mémorisés ;
des moyens d'adoption sensibles aux moyens de comparaison pour adopter un des numéros d'authentification mémorisés et un des numéros d'identification de mobile mémorisés, chacun correspondant à un des numéros d'identification de système mémorisés qui est identique au numéro d'identification de système reçu ; et
des moyens de génération sensibles aux moyens d'adoption pour générer des données en réponse au numéro d'identification de mobile adopté et au numéro d'authentification adopté.

2. Dispositif selon la revendication 1, dans lequel les moyens d'adoption adoptent, en outre, un numéro d'authentification prédéterminé lorsque le numéro d'identification de système reçu ne coïncide avec aucun des numéros d'identification mémorisés.

3. Dispositif selon la revendication 2, comprenant en outre des moyens de transmission sensibles aux moyens d'adoption et aux moyens de génération pour transmettre le numéro d'identification de mobile adopté et les données générées à la station de base.

4. Dispositif selon la revendication 3, **caractérisé en ce que** le dispositif comprend, en outre, des moyens de génération (30) sensibles aux moyens d'adoption (30) pour générer des données en réponse au numéro d'identification de mobile adopté et au numéro d'authentification adopté.

5. Dispositif selon la revendication 4, **caractérisé en ce que** le dispositif comprend, en outre, des moyens de transmission (16) sensibles aux moyens d'adoption (30) et aux moyens de génération (30) pour transmettre le numéro d'identification de mobile adopté et les données générées à la station de base.

6. Dispositif selon la revendication 3, **caractérisé en ce que** le dispositif comprend, en outre, des moyens de commande (30) sensibles aux moyens d'adoption (30) pour entrer le numéro d'identification de mobile adopté et le numéro d'authentification adopté dans un algorithme et pour délivrer des données correspondant à une sortie de l'algorithme.
